# EUROPEAN PATENT SPECIFICATION

(11) **EP 0 914 392 B1**
(45) Date of publication and mention of the grant of the patent: **25.10.2000**
(21) Application number: 97931964.7
(22) Date of filing: 18.07.1997
(51) Int. Cl.: C09D 11/00

(54) **LUMINESCING INKS AND USE OF SUCH INKS IN CODING AND OTHER MARKING OPERATIONS**
LUMINESZIERENDE TINTEN UND IHRE VERWENDUNG IN KODIERUNG UND ANDEREN MARKIERUNGEN
ENCRES LUMINESCENTES ET UTILISATIONS DE CES ENCRES POUR LE CODAGE ET AUTRES OPERATIONS DE MARQUAGE

(30) Priority: 18.07.1996 GB 9615110
(43) Date of publication of application: 12.05.1999
(73) Proprietor: THE POST OFFICE, London EC1V 9HQ (GB)
(72) Inventor: BROWN, Paul, Robert, Wilts SN3 5AZ (GB); HEWISON, Simon, Wilts SN3 4YJ (GB); KONDRATOWICZ, Anna, Wilts SN1 4HX (GB); METSON, Clive, Alan, Lionel, Swindon,Wilts SN4 7RH (GB); ROCK, John, Swindon,Wilts SN6 7PJ (GB); SCOTT, Richard, Swindon,Wilts SN1 4PW (GB)
(74) Representative: Silverman, Warren
(86) International application number: GB9701950
(87) International publication number: WO9803596

(56) References cited:
- GB-A- 1 494 103
- US-A- 3 867 302
- US-A- 4 186 020
- US-A- 5 256 192

## Description

This invention relates to luminescing inks and use of such inks in coding and other marking operations. In particular, the invention relates to the use in such inks of phosphors comprising molecules of at least one phosphorescent activator.

Organic phosphors comprising molecules of at least one phosphorescent activator are known for example from British Patent Specifications Nos. 870,504, 1,494,102 and 1,494,103, as well as EP-A-0325825. These organic phosphors contain molecules of at least one phosphorescent activator held within a matrix of a condensation resin that does not itself absorb ultraviolet or visible radiation at the excitation and emission frequencies of the phosphorescent activators. The resin itself is formed by condensation of a precursor thereof in the presence of phosphorescent activators so that the molecules of the latter are trapped and isolated from one another in the matrix. The resin is preferably a condensation product of formaldehyde, generally with an amine group-containing compound, especially urea or melamine. The phosphor is a solid generally insoluble in water and organic solvents and, for use in a phosphorescent printing ink, may be ground finely and dispersed in a suitable solvent, for example toluene.

Examples of phosphorescent activators for use as aforesaid include carbazole sulphonic acid, naphthalene disulphonic acid, diphenylguanidine and 2-amino benzophenone. Of particular interest have proved to be phosphorescent activators according to EP-A-0325825 which are optionally sulphonated substituted (preferably amino) aryl-aryl-ketones.

The chemical make up of such inks has been a source of difficulty. Carcinogenicity and odour are problems often of concern with aromatic solvents and ketones. Moreover the early inks based on melamine-formaldehyde and like resins showed in a few cases evidence of acute skin irritation properties attributable to the presence of traces of free formaldehyde.

It is well known that phosphorescence does not easily occur in solution and is best obtained with a rigid polymeric matrix, such as described above. In respect of the composition of jet printer inks, initially the same starting materials, melamine and formaldehyde, were used as for the pigment on coding tape, except that the reaction was terminated at a much earlier time resulting in a resin of relatively low molecular weight. The most effective yellow/green phosphorescent activator according to EP-A-0325825, is sulphonated 1-(4-aminobenzoyl)-naphthalene, which, combined with the melamine-formaldehyde resin in solution at a level of about 30% solids, gives an ink which can be read on a very wide range of letter envelopes, including manilla and white. However, despite such improvements to the ink because of sulphonation of the activator and the resin to prevent precipitate formation particularly when the ink is subject to temperatures lower than 10°C, the dynamic range of the signal strength between white and manilla was also a problem, signal differences of as much as a factor of 10 often occurring.

Moreover, such ink, when made exactly to formulation, was found to require far too long, typically 15 to 30 minutes, for full brightness to occur. This was considered to be too slow, particularly, for the increased speeds of automated sorting processes. The material was in fact touch dry within one minute, but this was also considered to be too slow.

Thus, while phosphorescence does not easily occur in solution and is best obtained within a rigid polymeric matrix, for reasons as aforesaid, there are many application benefits in having binder and activator in solution, or at least not in a solid polymeric matrix, and subsequent research has been based upon the need to fulfil this requirement with binder and activator resin being present in liquid phase until the ink has dried on the surface to which it has been applied.

It is known, however, that when using a thermosetting polymer as binder in a reactive ink, this will, given sufficient time, increase in molecular weight to the point of gelling or precipitation. In an attempt to avoid the use of binders as aforementioned, further phosphorescent materials made up from mixtures of appropriate activator and polymer were investigated. A wide range of polymers was used for this purpose, including polystyrene, polyethylene oxide and acrylic polymers based inter alia on acrylic and/or methacrylic acid, using a variety of solvents therefor.

It was rapidly found that most of the new binders which were based on polyacrylic acid had a much greater affinity for water than for organic solvents. While water is the most attractive solvent in terms of environmental considerations, it is by far the slowest drying, and thus, while the use of polyacrylic acid in an aqueous solvent has many advantages, both environmental and practical from the point of view of non-clogging ink formulations, there remains the problem that the phosphorescence exhibited by the inks is initially poor while the phosphorescence activators remain in the solution phase. This problem is exacerbated with items of mail which have remained under damp conditions, such as during prolonged storage in mail boxes. Not only will there be inherent moisture, but moisture from the ink, which moisture, prior to full drying, will inhibit the full manifestation of phosphorescent behaviour. This problem has, however, been reduced to some extent by reducing the droplet volume applied by the jet printer to about one tenth of that used for earlier inks.

It is an object of the present invention to provide inks which manifest luminescent behaviour for an extended period of time on exposure to ultraviolet light, with the luminescent behaviour being achieved immediately on irradiation irrespective of the amount of moisture present.

According to one aspect of the invention, there is provided an ink composition comprising, in solution in an aqueous and/or alcoholic medium, a substance which fluoresces but does not phosphoresce when the ink composition has been applied to a substrate, moisture is present and the substrate is being exposed to ultraviolet light; a substance which phosphoresces and fluoresces when the ink composition has been applied to a substrate, moisture is substantially absent and the substrate has been exposed to ultraviolet light, and a binder which is soluble or emulsifiable in said medium.

According to a second aspect of this invention, there is provided a process for rendering at least part of a moisture-absorbing surface luminescent both when the surface is moist and when it holds no moisture, as well as at intermediate levels of moisture content, which comprises applying to at least part of said surface an ink composition comprising, in an aqueous and/or alcoholic medium, both a fluorescence activator which fluoresces but does not phosphoresce when the surface is exposed to ultraviolet light and moisture is present and a phosphorescence activator which phosphoresces and fluoresces when applied to a surface and exposed to ultraviolet light, moisture being substantially absent, such that exposure of the surface to ultraviolet light will lead to emission of detectable phosphorescence, fluorescence and combined phosphorescence and fluorescence, the extent of phosphorescence depending upon the amount of moisture at the surface.

For the purposes of understanding the invention set out herein, a fluorescent substance is a light-emitting substance having an afterglow having a duration of the order of nanoseconds while phosphorescent materials will have an afterglow lasting up to 500 milliseconds or more. Thus, in terms of detection of post code marks, fluorescent materials will be detected while illuminated with an ultraviolet source say of 365nm wavelength with moisture being present and, as a result of the simultaneous use of a lamp of 310nm output, red phosphorescent materials will glow when the amount of moisture present has dropped sufficiently and will provide an afterglow with the ultraviolet light extinguished. Such use of lamps of two wavelengths will obviously require two detectors for the respective emissions.

Thus, the present invention makes use of combinations of substances which, at certain wavelengths, will exhibit phosphorescence and also fluorescence, the brightness of phosphorescence depending on the excitation wavelength and the amount of water present. At the beginning of a mail sorting run, results may be less than satisfactory, as may occur when the moisture content of envelopes being handled is too high. This may well be the case when sorting newly arrived mail. If use is made of phosphorescent activator alone, the intensity, initially, of the emissions may be insignificant. Hence, this invention proposes to compensate for this deficiency in the ink by the inclusion of a second luminescencing substance, specifically a fluorescent material. Moreover, as will become clear hereinafter a much enhanced dynamic range on manilla paper is experienced, the range being reduced from 10 x as previously to the order of 2-4 x.

Separate detection systems may be employed to detect phosphorescent and fluorescent light emissions. Such scanners respond to the brightest single emission and are sensitive to red wavelengths, inter alia, the benefit of which will be apparent hereinafter.

For the purpose of this invention, use may be made typically of the following phosphorescent activators:
N-Phenyl-carbazole
2,2'-Dihydroxy benzophenone
2,4-Dihydroxy benzophenone
Dibenzothiophene
Dansyl aziridine
Azulene
1-(4-Phenylbenzoyl) naphthalene
1-Naphthoylnaphthalene
1-(4-Carboxybenzoyl)-naphthalene
1-(4-Chlorobenzoyl)-naphthalene
1-(4-Hydroxybenzoyl)-naphthalene
1-Benzoylnaphthalene
2-Benzoylnaphthalene
6-Benzoyl-2-naphthol
4-Benzoylbiphenol
N-Phenylcarbazole
Diphenylfulvene
2,3-Diphenylindenone
Diphenyl.

As experiments described hereinafter will show, the phosphorescent activators most effective when used in a thermoplastic binder/solvent system are the sulphonated derivatives of, in particular, 1-(4-phenylbenzoyl)-naphthalene, 1-naphthoylnaphthalene, 1-(4-carboxybenzoyl)-naphthalene and 1-benzoylnaphthalene. The latter two compounds may also be used to some advantage in unsulphonated form. Two other compounds that have shown potential were phenyl carbazole and benzoyl biphenol. When account is taken of the responses on different papers, sulphonated 1-(4-phenylbenzoyl)-naphthalene (PBAS) and sulphonated 1-naphthoylnaphthalene were most effective.

Whereas hitherto use has been made of melamine-formaldehyde resin binder, this is a thermosetting system and only by careful control of reaction time, temperature and pH, can the molecular weight of the polymer be kept sufficiently low, to approximately 600, for use in formulations. However, because the system has a low reaction rate at ambient temperatures, the resulting inks have a shelf life of around 6 months, after which their viscosity increases above that tolerated by ink jet printers.

It is for this reason, that attention has been diverted to more stable emulsified resin systems which, being inherently non-reactive, will not have this aging problem. Hence the aforementioned thermoplastic binders are used in preferred practice embodying this invention.

Polyacrylic acids are available which are soluble in water and methanol-based solvents up to molecular weights of the order of 6000. Of particular interest as binder materials have been found to be polyacrylic acid of molecular weight 2000-3000. For practical purposes it has been found that an ink embodying this invention should have the physical properties set out in the following table.

**TABLE 1**

| **Characteristic** | **Test Method** | **Requirements** |
|---|---|---|
| Viscosity | Brookfield viscometer using small sample adapter | 3-20, preferably 8.0 - 9.0, mPa.s* |
| Surface tension | Surface tension balance (DuNuoy ring) | 20-40 Dynes/cm* |
| Density | Density meter | 1.1-1.4 g/cm³ |
| Turbidity | Turbidity meter | Less than 10 National Turbidity Units (NTU)* |
| Conductivity | Conductivity cell | > 10 millisiemens/cm* |
| Phosphorescence intensity | Using a Post Office Mark III Mark IV phosphorimeter | 1.5 or phosphorescence units minimum on white filter paper, 0.4 phosphorescence units minimum on buff paper |

| | | |
|---|---|---|
| *@ 22 ± 2°C | | |

These requirements have been found to be met particulary well by using stabilised emulsions of polyacrylic acid of M.W. about 2000-2200 in water.

Tests have also been carried out with other thermoplastic materials including polyethylene oxide of molecular weight 100,000, polyvinylpyrrolidine of molecular weight 10,000, a polyamide and polystyrene. These were tried with a number of activators but gave less satisfactory results than with polyacrylic acid, in terms of brightness. In general, brightness determinations were carried out on activators present in rigid amorphous thermoplastic polymers at low temperatures.

Also important is the time to reach maximum brightness since it determines the minimum time between printing and reading of the code marks. This is controlled by the drying speed of the ink which may be thought of as a two stage process. Firstly, there is rapid drying by absorption to give smudge free surface conditions. This is followed by a much slower process whereby the polymer loses the remaining solvent. This latter process would be significantly influenced by the moisture present in the substrate to which the ink has been applied. The latter process is of particular importance because it controls the time it takes for the ink to phosphoresce. Hence the amount of moisture present will determine the phosphorescence signal obtained, but the reading problem when such signal is too weak will be compensated for by the fluorescent activator present in solution in the ink.

All the aforementioned phosphors, if used alone, produce a blue or yellow emission. Insofar as there is a need to achieve satisfactory phosphorescence detection irrespective of paper background colour, it has been found in practice to be desirable to produce a red phosphorescence emission and detectors appropriate to such emission. Previously, use was made of phosphorescence activators which, when excited at 365nm, produced a blue and yellow-green emission more suited to the photomultiplier detectors employed in the previous generation of sorting equipment. However, new detection equipment is available commercially, in particular the Philtec reader of Philips Technology, Eindhoven, NL, which is sensitive to 600-620nm and in the red range which occurs when the phosphor is excited at 310nm. Such readers use a WSX-1 line scan camera supplied by Wessex Technology which works on a greyscale of sensitivity which can be controlled by software and programmed to analyse in detail any marks which are detected. The red phosphorescence may be achieved by introducing a red fluorescent dyestuff into the composition in addition to the phosphorescence activator. This may be a sulphonated rhodamine base such as Acid red 52 (rhodamine B base).

For fluorescence to be utilized in coding mail items, the concentration of fluorescing substance must be maintained reliably. Thus, it has become desirable to enhance the intensity of fluorescence in a sustainable manner and so as to minimise mis-readings against background interference.

Enhanced fluorescence intensity can be achieved by the addition of a yellow fluorescent dye-stuff, sulphonated Duasyn, i.e. 1,H-xantheneno[2,1,9-Def]isoquinoline-1,3-(2H)-dione-2-(2-hydroxyethyl)-7-sodium sulphonate, and fluorescein DT being two examples. Some green fluorescent dyestuffs have also been found to have a beneficial effect in enhancing the level of fluorescence. These include naphthol green B, lissamine green, guinea green and acid green. The dye, Colour Index 264, is a blue fluorescent dye which can be utilised.

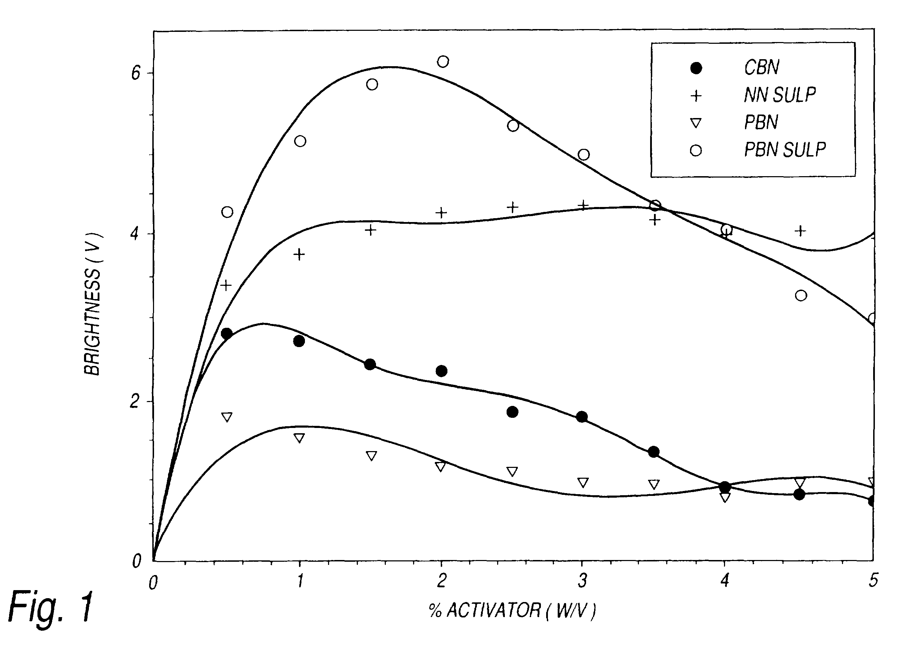

Maximum phosphorescent brightness occurs at an optimum activator concentration. Reference is made in this connection to Figure 1 of the accompanying drawings. Increasing the amount of activator above this results in decreasing brightness due to self quenching effects. This optimum value depends on the binder material concentration and so can only be measured once this has been selected. Among the brightest activators are 1-naphthoylnaphthalene, 1-(4-phenylbenzoyl) naphthalene and 1-(4-carboxybenzoyl)naphthalene.

In order to further improve the fluorescent response of the phosphorescent additive, optical brightening agents may be added which emit in the blue region of the spectrum to effect transfer of energy from blue through yellow to red. These are also fluorescent activators. Among the compounds which may be utilised for this purpose are the following:
7-Hydroxy-4-methyl coumarin
3 -Hydroxycinnamic acid
2-Hydroxycinnamic acid
7-Hydroxycoumarin
3-4-Dihydroxycinnamic acid
4-Hydroxycinnamic acid
Fluorescent brightener 28
Fluorescent brightener 140
Scopoletin
6,7-Dimethoxycoumarin

Ink particularly suitable for post coding mail and embodying the invention will thus contain a phosphorescent activator and a fluorescent dyestuff from the range of red, yellow, green and blue fluorescent additives to produce the correct intensity of luminescence suitable for accurate reading of post codes applied to the mail. The ink will also preferably comprise a solvent, usually water, and a polyacrylic acid binder of low to medium molecular weight. Surfactants and anti-foaming agents will be added as appropriate to the printer system in use.

A typical red formulation as such would be as follows:-

| **Material** | **Quantity** |
|---|---|
| Polyacrylic acid of molecular weight 2000 | 12.5 Kilograms |
| 1-(4-Phenylbenzoyl)-naphthalene sulphonate (PBNS) | 250.0 grams |
| Sulphonated rhodamine B Base | 15 grams |
| Modified alcohol ethoxylate surfactant, e.g.Ethylan CPG660 (produced by Harcross Chemicals (UK) Ltd) | 16.25 grams |
| Dow Corning DB-110A (EU) | |
| Antifoam agent | 8.0 grams |
| Distilled water | 10.0 kilograms |

A typical formulation for maximum performance which contains yellow, blue and red dyestuffs will be:

| **Material** | **Quantity (g)** |
|---|---|
| Polyacrylic Acid MW 2000 | 2611.0 |
| Sulphonated Duasyn | 74.0 |
| Sulphonated Rhodamine B Base | 3.2 |
| PBNS | 78.0 |
| Modified alcohol ethoxylate surfactant, e.g. Ethylan CPG 660 | 3.5 |
| Dow Corning DB - 110A (EU) | 1.7 |
| Blue Fluorescent Dye Colour Index 264 | 96.0 |
| Distilled Water | 2132.0 |

The invention enables a consistently high brightness reading to be obtained from substrates coated with inks embodying this invention at whatever the prevailing relative humidity. This enables the Philtec reader as aforesaid to be used for scanning mail. This will activate fluorescence and provide phosphorescence according to the prevailing relative humidity to give acceptable signal levels whether due to fluorescence, phosphorescence or a simultaneous scanning of fluorescence and phosphorescence.

The following test was carried out to illustrate the merits of this invention.

### TEST

### Brightness as a function of concentration of Relative Humidity and Colour

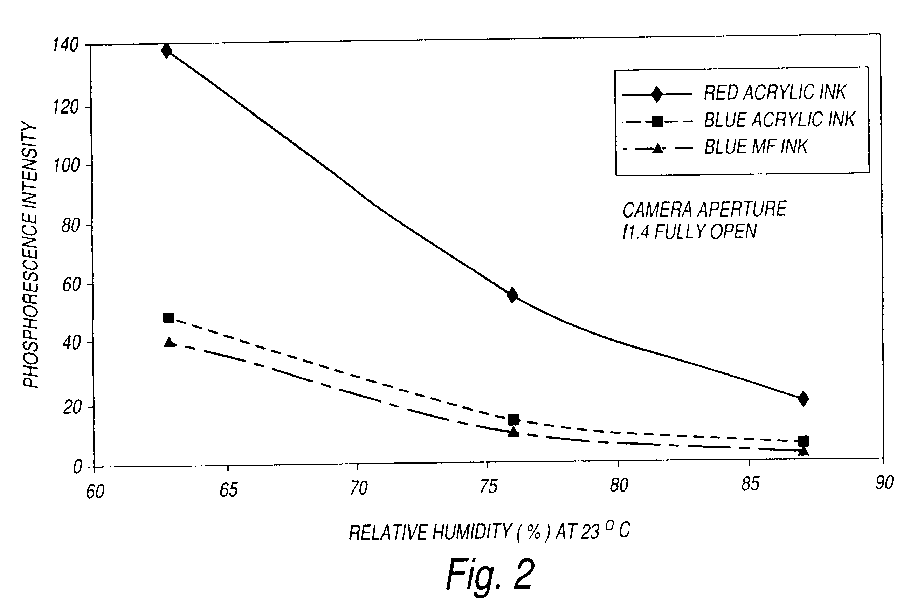

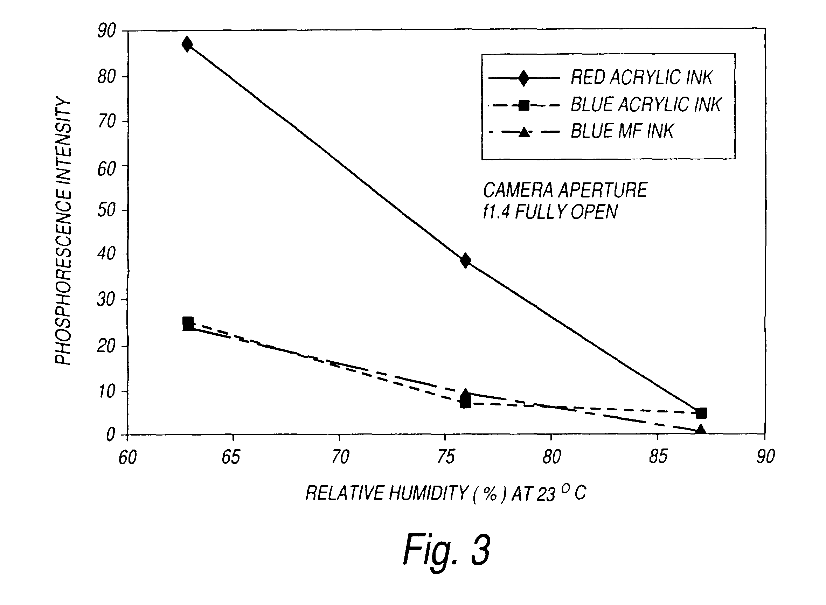

Comparative brightness measurements were made for aqueous solutions of phosphorescent activator-containing inks spotted onto white and manilla papers using the Philtec reader for determining phosphorescent brightness at activation wavelength 310nm, in addition to the Post Office Mark III phosphorimeter. The results obtained for red and blue acrylic inks (and also blue melamine-formaldehyde resin ink) are shown in Figures 2 and 3 of the accompanying drawings which show that much reduced brightness is achieved in each case as relative humidity increases from 62.5% It can be seen that a red acrylic ink is considerably superior to blue acrylic ink and for that matter blue melamine-formaldehyde inks containing aminobenzoyl naphthalene as phosphorescent activator in respect of phosphorescent code mark brightness at relative humidity values of up to about 85% or more in the case of white paper.

Moreover, while the ratio of phosphorescence signal to background light emission signal was low for blue MF ink bars it was much more satisfactory with red acrylic ink bars. Values measured in this connection appear in the following Table 2. The background greyscale value for the Philtec reader is largely independent of envelope colour in the phosphorescence mode and is generally of the order of 0 to 1.

**TABLE 2**

| **Phosphorescent Coding Materials Comparison Typical greyscale brightness values taken from a Philtec reader** | | | |
|---|---|---|---|
| Material | Blue coding tape dots | Blue MF ink bars | Red Acrylic ink bars |
| White average | 110 | 41 | 158 |
| Manilla average | 53 | 8* | 46 |
| Signal range | x 2 | x 5.3 | x 3.4 |

| | | | |
|---|---|---|---|
| * The minimum greyscale value which can be identified as a bar is 13-14. Relative humidity at point of measurement = 50%. Camera aperture f2. The ratio of phosphorescent signal to background light emission is high in all cases except for blue MF ink marks on manilla paper. | | | |

While the above tests were of value in establishing the relative merits of blue MF, blue acrylic and red acrylic inks and show that improved read rates are obtained with red acrylic inks over either of the blue inks, they also show that at very high levels of humidity, problems are still encountered. It is for this reason that fluorescence activators are utilised in inks according to the invention to enable reading of codes to take place immediately on excitation of the ink activator content. UV irradiation for fluorescence activation and stimulation of phosphorescence being continued until phosphorescence afterglow is available for reading.

## Claims

1. An ink composition comprising, in solution in an aqueous and/or alcoholic medium, a substance which fluoresces but does not phosphoresce when the ink composition has been applied to a substrate, moisture is present and the substrate is being exposed to ultraviolet light; a substance which phosphoresces and fluoresces when the ink composition has been applied to a substrate, moisture is substantially absent and the substrate has been exposed to ultraviolet light, and a binder which is soluble or emulsifiable in said medium.

2. An ink as claimed in claim 1, which comprises a thermoplastic binder.

3. An ink composition as claimed in claim 2, wherein the binder is a polyacrylic acid of molecular weight 2000-3000.

4. An ink composition as claimed in any preceding claim which has a viscosity obtained using a Brookfield Viscometer of from 3 - 20 mPa.s. at 22±2°C.

5. An ink composition as claimed in any preceding claim which has a surface tension of from 20 to 40 dynes/cm at 22±2°C.

6. An ink composition as claimed in any preceding claim, which has a density of from 1.1 - 1.4g/cm³.

7. An ink composition as claimed in any preceding claim which has a turbidity of less than 10 National Turbidity Units at 22±2°C.

8. An ink composition as claimed in any preceding claim having a turbidity of less than 10 MTU at 22±2°C.

9. An ink composition as claimed in any preceding claim which has a conductivity of more than 10 millisiemens/cm at 22±2°C.

10. An ink composition as claimed in any preceding claim, wherein the binder is a polyacrylic acid and the solvent is water.

11. An ink composition as claimed in any preceding claim which contains a phosphorescence activator selected from:
n-phenyl-carbazole
2,2'-dihydroxy benzophenone
2,4-dihydroxy benzophenone
dibenzothiophene
dansyl aziridine
azulene
1-(4-phenylbenzoyl)-naphthalene
1-naphthoyl-naphthalene
1-(4-carboxybenzoyl)-naphthalene
1-(4-chlorobenzoyl)-naphthalene
1-(4-hydroxybenzoyl)-naphthalene
1-Benzoylnaphthalene
2-benzoylnaphthalene
6-benzoyl-2-naphthol
4-benzoylbiphenol
N-phenylcarbazole
diphenyl fulvene
2,3-diphenylindenone
and diphenyl, and sulphonation derivatives thereof.

12. An ink composition as claimed in any one of claims 1 to 10 which contains a phosphorescence activator selected from sulphonated derivatives of 1-(4-phenylbenzoyl)-naphthalene and 1-naphthoylnaphthalene, and 1-(4-carboxybenzoyl)-naphthalene and 1-benzoylnaphthalene as such and in sulphonated form.

13. An ink composition as claimed in any one of claims 1 to 10 which contains a phosphorescence activator producing blue or yellow phosphorescence.

14. An ink composition as claimed in any one of claims 1 to 10, wherein the phosphorescence activator has an excitation optimum at about 310nm.

15. An ink composition as claimed in any one of claims 1 to 13, which additionally contains a red fluorescent dyestuff whereby red phosphorescence is obtained.

16. An ink composition as claimed in claim 15, wherein the red dyestuff is a sulphonated Rhodamine Base, in particular Acid red 52.

17. An ink composition as claimed in any preceding claim which contains a green fluorescent dyestuff selected from naphthol green B, lissamine green, guinea green and acid green.

18. An ink composition as claimed in any one of claims 1 to 17, which contains a yellow fluorescent dyestuff selected from sulphonated Duasyn and fluorescein DT.

19. An ink composition as claimed in any one of claims 1 to 18 which contains blue fluorescent dye, the dye Colour Index 264.

20. An ink composition as claimed in any preceding claim which contains a fluorescent optical brightening agent which emits in the blue region of the spectrum.

21. An ink composition as claimed in claim 20, wherein the optical brightening agent is selected from:
7-hydroxy 4 methyl coumarin
3-hydroxycinnamic acid
2-hydroxycinnamic acid
7-hydroxycoumarin
3-4-dihydroxycinnamic acid
4-hydroxycinnamic acid
Fluorescent brightener 28
Fluorescent brightener 140
Scopoletin and
6-7-dimethoxycoumarin.

22. An ink composition as claimed in any preceding claim, which is applied to a Manilla substrate.

23. A process for rendering at least part of a moisture-absorbing surface luminescent both when the surface is moist and when it holds no moisture, as well as at intermediate levels of moisture content, which comprises applying to at least part of said surface an ink composition comprising in an aqueous and/or alcoholic medium, both a fluorescence activator which fluoresces but does not phosphoresce when the surface is exposed to ultraviolet light and moisture is present and a phosphorescence activator which phosphoresces and fluoresces when applied to a surface and exposed to ultraviolet light, moisture being substantially absent, such that exposure of the surface to ultraviolet light will lead to emission of detectable phosphorescence, fluorescence and combined phosphorescence and fluorescence, the extent of phosphorescence depending upon the amount of moisture at the surface.

24. A process as claimed in claim 23, wherein the phosphorescence activator and fluorescence activator are comprised by an ink composition as claimed in any one of claims 1 to 22.

25. A process as claimed in claim 23 or 24, wherein said composition is applied to a Manilla substrate.

## Patentansprüche

1. Farbzusammensetzung, umfassend, gelöst in einem wässrigen und/oder alkoholischen Medium, eine Substanz, die fluoresziert aber nicht phosphoresziert wenn die Farbzusammensetzung auf ein Substrat aufgebracht wird, Feuchtigkeit vorhanden ist und das Substrat ultravioletem Licht ausgesetzt wird, eine Substanz, die phosphoresziert und fluoresziert wenn die Farbzusammensetzung auf ein Substrat aufgebracht wird, im Wesentlichen keine Feuchtigkeit vorhanden ist und das Substrat ultravioletem Licht ausgesetzt wird und ein Bindemittel, das in dem Medium löslich oder emulgierbar ist.

2. Farbe nach Anspruch 1, die ein thermoplastisches Bindemittel enthält.

3. Farbzusammensetzung nach Anspruch 2, wobei das Bindemittel eine Polyacrylsäure mit einem Molekulargewicht von 2000 bis 3000 ist.

4. Farbzusammensetzung nach einem der vorstehenden Ansprüche, die eine Viskosität hat, gemessen mit einem Brookfield-Viskosimeter, von 3 bis 20 mPa.s. bei 22±2°C.

5. Farbzusammensetzung nach einem der vorstehenden Ansprüche, die eine Oberflächenspannung hat von 20 bis 40 Dyn/cm bei 22±2°C.

6. Farbzusammensetzung nach einem der vorstehenden Ansprüche, die eine Dichte von 1,1 bis 1,4 g/cm³ hat.

7. Farbzusammensetzung nach einem der vorstehenden Ansprüche, die eine Trübung von weniger als 10 Nationale Trübungseinheiten hat bei 22±2°C.

8. Farbzusammensetzung nach einem der vorstehenden Ansprüche mit einer Trübung von weniger als 10 MTU bei 22±2°C.

9. Farbzusammensetzung nach einem der vorstehenden Ansprüche, die eine Leitfähigkeit von mehr als 10 Millisiemens/cm hat bei 22±2°C.

10. Farbzusammensetzung nach einem der vorstehenden Ansprüche, worin das Bindemittel eine Polyacrylsäure ist und das Lösungsmittel Wasser.

11. Farbzusammensetzung nach einem der vorstehenden Ansprüche, die einen Phosphoreszenz-Aktivator enthält, ausgewählt aus:
N-Phenyl-carbazol,
2,2'-Dihydroxybenzophenol,
2,4-Dihydroxybenzophenol,
Dibenzothiophen,
Dansyl-aziridin,
Azulen,
1-(4-Phenylbenzoyl)-naphthalen,
1-Naphtoyl-naphthalen,
1-(4-Carboxybenzoyl)-naphthalen,
1-(4-Chlorbenzoyl)-naphthalen,
1-(4-Hydroxybenzoyl)-naphthalen,
1-Benzoylnaphthalen,
2-Benzoylnaphthalen,
6-Benzoyl-2-naphthol,
4-Benzoylbiphenol,
N-Phenylcarbazol,
Diphenylfulven,
2,3-Diphenylindenon
und Diphenyl- und Sulfonierungsderivate davon.

12. Farbzusammensetzung nach einem der Ansprüche 1 bis 10, die einen Fluoreszenz-Aktivator enthält, ausgewählt aus sulfonierten Derivaten von 1-(4-Phenylbenzoyl)naphthalen und 1-Naphthoylnaphthalen und 1-(4-Carboxybenzoyl)-naphthalen und 1-Benzoylnaphthalen als solche und in sulfonierter Form.

13. Farbzusammensetzung nach einem der Ansprüche 1 bis 10, die einen Phosphoresenz-Aktivator enthält, der blaue oder gelbe Phosphoresenz erzeugt.

14. Farbzusammensetzung nach einem der Ansprüche 1 bis 10, wobei der Phosphoreszenz-Aktivator ein Anregungsoptimum bei etwa 310 nm hat.

15. Farbzusammensetzung nach einem der Ansprüche 1 bis 13, die zudem einen rot fluoreszierenden Farbstoff enthält, wodurch rote Fluoreszenz erreicht wird.

16. Farbzusammensetzung nach Anspruch 15, worin der rote Farbstoff eine sulfonierte Rhodaminbase ist, insbesondere Säure-Rot 52.

17. Farbzusammensetzung nach einem der vorstehenden Ansprüche, die einen grün fluoreszierenden Farbstoff enthält, ausgewählt aus Naphthol-Grün-B, Lissamin-Grün, Guinea-Grün und Säure-Grün.

18. Farbzusammensetzung nach einem der Ansprüche 1 bis 17, die einen gelb fluoreszierenden Farbstoff enthält, ausgewählt aus sulfoniertem Duasyn und Fluoreszein-DT.

19. Farbzusammensetzung nach einem der Ansprüche 1 bis 18, welcher blau fluoresezierenden Farbstoff enthält, der Farbzahl 264.

20. Farbzusammensetzung nach einem der vorstehenden Ansprüche, die ein fluoreszierendes optisches Aufhellungsmittel enthält, das im Blaubereich des Spektrums emittiert.

21. Farbzusammensetzung nach Anspruch 20, wobei das optische Aufhellungsmittel ausgewählt ist aus:
7-Hydroxy-4-methylcoumarin,
3-Hydroxyzimtsäure,
2-Hydroxyzimtsäure,
7-Hydroxycoumarin,
3-4-Dihydroxyzimtsäure,
4-Hydroxyzimtsäure,
Fluoreszenz-Aufheller 28,
Fluoreszenz-Aufheller 140,
Scopolectin und
6-7-Dimethoxycoumarin.

22. Farbzusammensetzung nach einem der vorstehenden Ansprüche, der auf ein Manila-Substrat aufgebracht wird.

23. Verfahren zum Erzeugen von Lumineszenz auf mindestens einem Teil einer Feuchtigkeit-aufnehmenden Oberfläche, sowohl wenn die Oberfläche feucht ist als auch wenn sie keine Feuchtigkeit enthält sowie bei einem mittleren Feuchtigkeitsgehalt, umfassend das Aufbringen auf mindestens einen Teil der Oberfläche eine Farbzusammensetzung, umfassend, in einem wässrigen und/oder alkoholischen Medium, sowohl einen Fluoreszenz-Aktivator, der fluoresziert aber nicht phosphoresziert wenn die Oberfläche ultravioletem Licht ausgesetzt ist und Feuchtigkeit vorhanden ist, und einen Phosphoreszenz-Aktivator, der phosphoresziert und fluoresziert wenn er auf eine Oberfläche aufgebracht wird und ultravioletem Licht ausgesetzt wird, wobei im Wesentlichen keine Feuchtigkeit vorhanden ist, so dass das Aussetzen der Oberfläche gegenüber ultravioletem Licht zu einer Ausstrahlung nachweisbarer Phosphoreszenz, Fluoreszenz und kombinierter Phosphoreszenz und Fluoreszenz führt, wobei das Ausmaß der Phosphoreszenz von der Feuchtigkeitsmenge an der Oberfläche abhängt.

24. Verfahren nach Anspruch 23, wobei der Phosphoreszenz-Aktivator und der Fluoreszenz-Aktivator von einer Farbzusammensetzung nach einem der Ansprüche 1 bis 22 umfasst sind.

25. Verfahren nach Anspruch 23 oder 24, wobei die Zusammensetzung auf ein Manila-Substrat aufgebracht wird.

## Revendications

1. Composition d'encre comprenant, en solution dans un milieu aqueux et/ou alcoolique, une substance qui devient fluorescente mais non phosphorescente lorsque ladite composition est appliquée sur un substrat, en présence d'humidité et le substrat étant exposé à la lumière ultraviolette, une substance qui devient phosphorescente et fluorescente lorsque la composition d'encre est appliquée sur un substrat, l'humidité étant substantiellement absente et le substrat étant exposé à la lumière ultraviolette, et un liant soluble ou sous forme d'émulsifiant dans ledit milieu.

2. Une composition d'encre selon la revendication 1, caractérisée en ce qu'elle comprend un liant thermoplastique.

3. Une composition d'encre selon la revendication 2, caractérisée en ce que le liant est un acide polyacrylique d'une masse moléculaire 2000-3000.

4. Une composition d'encre selon l'une quelconque des revendications précédentes, caractérisée en ce qu'elle présente une viscosité de 3 à 20 mPa.s. à 22 °C +-2 mesurée sur viscomètre Brookfield.

5. Une composition d'encre selon l'une des revendications précédentes, caractérisée en ce qu'elle présente une tension de surface de 20 à 40 dynes/cm à 22°C +-2.

6. Une composition d'encre selon l'une quelconque des revendications précédentes, caractérisée en ce qu'elle présente une masse volumique de 1,1-1,4 g/cm³.

7. Une composition d'encre selon l'une quelconque des revendications précédentes, caractérisée en ce qu'elle présente une turbidité inférieure à 10 unités (NATIONAL TURBIDITY UNITS) à 22 °C +-2.

8. Une composition d'encre selon l'une quelconque des revendications précédentes, caractérisée en ce qu'elle présente une turbidité inférieure à 10 MTU à 22 °C +-2.

9. Une composition d'encre selon l'une quelconque des revendications précédentes, caractérisée en ce qu'elle présente une conductivité supérieure à 10 millisienens/cm à 22 °C +-2.

10. Une composition d'encre selon l'une quelconque des revendications précédentes, caractérisée en ce que le liant est l'acide polyacrylique et le solvant l'eau.

11. Une composition d'encre selon l'une quelconque des revendications précédentes, caractérisée en ce qu'elle renferme un activateur phosphorescent choisi dans le groupe constitué par :
- le n-phényl-carbazole,
- le 2,2'-dihydroxybenzophénone,
- le 2,4-dihydroxybenzophénone,
- le dibenzothiophène,
- le dansylaziridine,
- l'azulène,
- le 1-(4-phénylbenzoyl)-naphtalène,
- le 1-naphthoyl-naphtalène,
- le 1-(4-carboxybenzoyl) -naphtalène,
- le 1-(4-chlorobenzoyl) -naphtalène,
- le 1-(4-hydroxybenzoyl) -naphtalène,
- le 1-benzoylnaphtalène,
- le 2-benzoylnaphtalène,
- le 6-benzoyl-2-naphtol,
- le 4-benzoylbiphénol,
- le N-phénylcarbazole,
- le diphényle fulvène,
- le 2,3-diphénylindénone,
et leurs dérivés diphényle et de sulfonation.

12. Une composition d'encre selon l'une quelconque des revendications 1 à 10, caractérisée en ce qu'elle renferme un activateur de phosphorescence choisi parmi les dérivés sulfonés du 1-(4-phénylbenzoyl)-naphtalène, du 1-naphthoylnaphtalène, du 1-(4-carboxybenzoyl)naphtalène et du 1-benzoylnaphtalène tels que ou bien sous leur forme sulfonée.

13. Une composition d'encre selon l'une quelconque des revendications 1 à 10, caractérisée en ce qu'elle renferme un activateur phosphorescent produisant une phosphorescence de couleur bleue ou jaune.

14. Une composition d'encre selon quelconque des revendications 1 à 10, caractérisée en ce que l'activateur de phosphorescence procure une excitation optimale vers 310 nm.

15. Une composition d'encre selon l'une quelconque des revendications 1 à 13, caractérisée en ce qu'elle renferme de plus un colorant rouge fluorescent pour obtenir une phosphorescence rouge.

16. Une composition d'encre selon la revendication 15, caractérisée en ce que le colorant rouge est une base rhodamine sulfonée, en particulier l'acide rouge 52.

17. Une composition d'encre selon l'une quelconque des revendications précédentes, caractérisée en ce qu'elle renferme un colorant vert fluorescent choisi parmi le groupe constitué par le naphtol vert B, la lissamine verte, le vert de Guinée et le vert acide.

18. Une composition d'encre selon l'une quelconque des revendications 1 à 17, caractérisée en ce qu'elle renferme un colorant jaune fluorescent choisi parmi le groupe constitué par la Duasyne sulfonée ou la fluorescéine DT.

19. Une composition d'encre selon l'une quelconque des revendications 1 à 18, caractérisée en ce qu'elle renferme un colorant bleu fluorescent, index de couleur 264.

20. Une composition d'encre selon l'une quelconque des revendications précédentes, caractérisée en ce qu'elle referme un agent de brillance optique fluorescent émettant dans le bleu du spectre.

21. Une composition d'encre selon la revendication 20, caractérisée en ce que l'agent de brillance optique est choisi parmi le groupe constitué par :
- la 7-hydroxy-4-méthylcoumarine,
- l'acide 3-hydroxycinnamique,
- l'acide 2-hydroxycinnamique,
- la 7-hydroxycoumarine,
- l'acide 3-4-dihydroxycinnamique,
- l'acide 4-hydroxycinnamique,
- le brillant fluorescent 28,
- le brillant fluorescent 140,
- la scopolétine, et
- la 6-7-diméthoxycoumarine.

22. Une composition d'encre selon l'une quelconque des revendications précédentes, caractérisée en ce qu'elle est appliquée sur un substrat Manilla.

23. Un procédé pour rendre luminescent au moins une partie d'une surface absorbant l'humidité à la fois lorsque la surface est mouillée et lorsqu'elle ne renferme aucune humidité, aussi bien que pour un niveau intermédiaire d'humidité, comprenant sur une partie au moins de ladite surface une composition d'encre constituée dans un milieu aqueux et/ou alcoolique, à la fois un activateur de phosphorescence qui devient fluorescent et non fluorescente lorsque la surface est exposée à la lumière ultraviolette en présence d'humidité et un activateur de phosphorescence qui devient phosphorescent et fluorescent lorsqu'elle est appliquée sur une surface et exposée à la lumière ultraviolette, l'humidité étant substantiellement absente, de telle façon que l'exposition de la surface à la lumière ultraviolette conduise à une émission détectable par phosphorescence, fluorescence et une combinaison de phosphorescence et de fluorescence, le niveau de phosphorescence dépendant de l'importance de l'humidité sur la surface.

24. Un procédé selon la revendication 23, caractérisé en ce que les activateurs de phosphorescence et de fluorescence sont inclus dans une composition d'encre selon l'une quelconque des revendications 1 à 22.

25. Un procédé selon la revendication 23 ou 24, caractérisé en ce que la composition est appliquée sur un substrat Manilla.
